# EUROPÄISCHE PATENTSCHRIFT

(11) **EP 3 616 180 B1**
(45) Veröffentlichungstag und Bekanntmachung des Hinweises auf die Patenterteilung: **14.12.2022**
(21) Anmeldenummer: 18712577.8
(22) Anmeldetag: 20.03.2018
(51) Int. Cl.: G08G 1/01

(54) **VERFAHREN ZUR DATENERHEBUNG**
METHOD FOR DATA COLLECTION
PROCÉDÉ POUR LA COLLECTE DE DONNÉES

(30) Priorität: 26.04.2017 DE 102017207014
(43) Veröffentlichungstag der Anmeldung: 04.03.2020
(73) Patentinhaber: Audi AG, 85045 Ingolstadt (DE)
(72) Erfinder: LANG, Johannes, 91099 Poxdorf (DE); LORENZ, Jens, 90425 Nürnberg (DE)
(86) Internationale Anmeldenummer: PCT/EP2018/056959
(87) Internationale Veröffentlichungsnummer: WO 2018/197111

(56) Entgegenhaltungen:
- EP-A2- 1 146 495
- DE-A1- 10 235 525
- DE-A1-102014 219 232
- DE-B3-102004 012 143
- US-A1- 2005 080 606
- US-A1- 2008 154 691
- ALI NAJAH ABU ET AL: "Utilizing VIN for improved vehicular sensing", 2016 IEEE WIRELESS COMMUNICATIONS AND NETWORKING CONFERENCE, IEEE, 3 April 2016 (2016-04-03), pages 1-6, XP032959201, DOI: 10.1109/WCNC.2016.7564813 [retrieved on 2016-09-12]
- Cohen Michael ET AL: "An Effective Method to Detect and Encapsulate Run Time Vulnerabilities on Cellular Networks", , 1 January 2014 (2014-01-01), pages 1-6, XP055875541, DOI: 10.13140/2.1.2093.0247 Retrieved from the Internet: URL:https://www.researchgate.net/profile/P hilip-Chan-12/publication/268504579_An_Eff ective_Method_to_Detect_and_Encapsulate_Ru n_Time_Vulnerabilities_on_Cellular_Network s/links/546cbe7f0cf26e95bc3ca34b/An-Effect ive-Method-to-Detect-and-Encapsulate-Run-T ime-Vulnerabilities-on-Cellular-Networks.p df [retrieved on 2021-12-22]

## Beschreibung

Die Erfindung betrifft ein Verfahren zur Datenerhebung mittels einer Fahrzeugflotte und einer zentralen Stelle, nach der im Oberbegriff von Anspruch 1 näher definierten Art.

Die Erfindung betrifft außerdem ein System zur Datenerhebung mittels einer Fahrzeugflotte, umfassend eine Fahrzeugflotte und eine zentrale Stelle, gemäß dem Oberbegriff von Anspruch 5.

Aus der Praxis ist es bekannt, Fahrzeuge einer Fahrzeugflotte zur Datenerhebung von für den Straßenverkehr relevanten Informationen und zur Überwachung der Fahrzeugflotte selbst heranzuziehen. Hierzu wird beispielsweise auf die DE 10 2015 205 094 A1 verwiesen, die eine automatische Detektion und Bewertung von Objekten, wie zum Beispiel Verkehrszeichen, insbesondere durch eine Fahrzeugflotte, sowie eine anschließende zentrale Analyse dieser Klassifizierung offenbart. Dadurch kann der Zustand von Verkehrszeichen entlang eines Verkehrsnetzes überwacht und ausgewertet werden. Verschmutzte und beschädigte Verkehrszeichen können rasch erkannt werden.

Üblicherweise sind für derartige Verfahren die zu erhebenden Daten, beispielsweise betreffend Verkehrsschilder, bereits in der Planungsphase eines Fahrzeugprojektes bekannt. Somit werden die Fahrzeuge der Fahrzeugflotte bereits fest für die Datenerhebung bezüglich spezifischer Daten vorkonfiguriert. Allerdings ist die Konfiguration aller Fahrzeuge einer Fahrzeugflotte in der Praxis nicht besonders effizient. So kann es beispielsweise erforderlich sein, lediglich Verkehrszeichen betreffend eine bestimmte Region zu erfassen. Die Daten der Fahrzeuge, die ihrerseits Verkehrszeichen aus ihrer Umgebung auswerten, die sich nicht in der gewünschten Region befinden, werden dann unnötiger Weise an die zentrale Stelle übertragen. Es werden somit u. a. Energie und Datenvolumen verschwendet.

Es hat sich außerdem gezeigt, dass eine vorbestimmte und festgelegte Datenausleitung nicht zukunftsorientiert und ausreichend flexibel ist. Insbesondere ist es nur schwer vorherzusagen, welche Daten zukünftig als Grundlage zur Entwicklung neuer Funktionen in Fahrzeugen, zur Qualitätsverbesserung von Bauteilen und/oder Fahrzeugen, zur Überwachung von Instandhaltungsmaßnahmen oder Reparaturmaßnahmen etc. benötigt werden. Gleichzeitig ist allerdings eine funktionsspezifische Datenausleitung sinnvoll, da eine Übertragung von sämtlichen Daten, die das Fahrzeug durch dessen Sensorik aufnimmt, an die zuständige zentrale Stelle einen enormen technischen Aufwand und ein übermäßig hohes Datenvolumen zur Übertragung voraussetzen würde. Somit wäre eine konfigurierbare, funktionsspezifische Datenausleitung aus den Fahrzeugen der Fahrzeugflotte vorzuziehen.

Ein derartiges Verfahren ist aus der DE 195 13 640 A1 bekannt. Die DE 195 13 640 A1 betrifft ein Verfahren zur Reduzierung einer aus Fahrzeugen einer Fahrzeugflotte, insbesondere einer Stichprobenfahrzeugflotte, zu übertragenden Datenmenge von Fahrzeugdaten, die Informationen über den Betriebszustand und/oder die Umgebung der Fahrzeuge enthalten, und Positionsdaten, die Informationen über die Position der Fahrzeuge in einem vorbestimmten Koordinatensystem jeweils zu einem bestimmten Zeitpunkt enthalten, nach Erfassung der anfallenden Fahrzeug- und Positionsdaten im Fahrzeug für die drahtlose Übertragung der Fahrzeug- und Positionsdaten an eine zentrale Stelle. Den Fahrzeugen der Fahrzeugflotte wird vorgegeben, welche der anfallenden Fahrzeug- und Positionsdaten unter welchen Bedingungen an die zentrale Stelle zu übertragen sind. Die Vorgaben sind von einer außerhalb der Fahrzeuge fest angeordneten Vorgabeeinrichtung drahtlos beeinflussbar.

Ein weiteres Verfahren zur Übermittlung wenigstens einer den aktuellen Verkehrszustand eines Streckenabschnitts bestimmenden Verkehrsinformation an eine zentrale Stelle ist aus der DE 10 2011 009 812 B3 bekannt.

Die gattungsgemäße US 2005/0080606 A1 betrifft ein Verfahren und ein System für ein konfigurierbares Datenerfassungstool für ein Fahrzeug einer Fahrzeugtestflotte.

Ein Nachteil der bekannter Verfahren ist, dass die zwischen Fahrzeug und der zentralen Stelle auszutauschenden Daten nach wie vor verhältnismäßig umfangreich werden können und dass der Rechenaufwand innerhalb der Fahrzeuge zur Realisierung der bekannten Verfahren verhältnismäßig hoch ist.

Zum weiteren, allgemeinen Stand der Technik wird noch auf die EP 1 146 495 A2 verwiesen, die ein Verfahren zur Steuerung mindestens einer Funktion eines Endgerätes über eine Funkschnittstelle und ein Endgerät betrifft.

Es ist Aufgabe der vorliegenden Erfindung, ein Verfahren zur Datenerhebung mittels einer Fahrzeugflotte und einer zentralen Stelle zu schaffen, bei dem die zu übertragende Datenmenge gering ist. Es ist auch Aufgabe der vorliegenden Erfindung, ein System zur Datenerhebung, umfassend eine Fahrzeugflotte und eine zentrale Stelle bereit zu stellen, um eine vorteilhafte Datenerhebung mittels der Fahrzeugflotte durchführen zu können.

Erfindungsgemäß wird die Aufgabe für das Verfahren durch die in Anspruch 1 genannten Merkmale gelöst.

Für das System wird die Aufgabe durch die in Anspruch 5 genannten Merkmale gelöst.

Bei dem erfindungsgemäßen Verfahren zur Datenerhebung mittels einer Fahrzeugflotte und einer zentralen Stelle ist vorgesehen, dass die zentrale Stelle Datenerfassungsaufträge für die Datenerhebung erstellt und wenigstens einen der Datenerfassungsaufträge an wenigstens ein Fahrzeug der Fahrzeugflotte übermittelt, wobei die Fahrzeuge der Fahrzeugflotte in der zentralen Stelle mittels Fahrzeugattributen identifizierbar sind.

Die Erfindung eignet sich für Fahrzeuge aller Art, d. h. für Landfahrzeuge, Wasserfahrzeuge, Luftfahrzeuge, sowie Raumfahrzeuge gleichermaßen. Ganz besonders eignet sich die Erfindung allerdings für Kraftfahrzeuge.

Als zentrale Stelle wird erfindungsgemäß eine Servereinrichtung, bestehend aus einem oder mehreren Servern, verwendet.

Die zentrale Stelle kann auch als "Backend" und das Fahrzeug als "Frontend" bezüglich der Datenerhebung bezeichnet werden.

Die Kommunikation zwischen der Fahrzeugflotte bzw. Fahrzeugen der Fahrzeugflotte und der zentralen Stelle kann kabellos, insbesondere auf Basis eines Funkstandards, oder kabelgebunden vorgesehen sein.

Erfindungsgemäß ist vorgesehen, dass die zentrale Stelle jeden Datenerfassungsauftrag mit einer Zielvorgabe verknüpft und dass die Fahrzeugattribute der Fahrzeuge, während die Fahrzeuge an der zentralen Stelle angemeldet sind, mit den Zielvorgaben der Datenerfassungsaufträge abgeglichen werden, wonach bei einer Übereinstimmung der Zielvorgabe eines der Datenerfassungsaufträge mit den Fahrzeugattributen eines der Fahrzeuge der korrespondierende Datenerfassungsauftrag an das entsprechende Fahrzeug übermittelt wird, wonach, in einem nachfolgenden Schritt, eine Datenerfassungseinrichtung des Fahrzeugs auftragsspezifische Daten erfasst und an die zentrale Stelle übermittelt.

Ein erfindungsgemäßer Datenerfassungsauftrag enthält also zumindest eine Beschreibung der von dem Fahrzeug auszuleitenden bzw. zu erfassenden Daten.

Die vorstehend genannte Zielvorgabe umfasst zumindest Informationen darüber, welche der Datenerfassungsaufträge für bestimmte Fahrzeuge, die sich durch entsprechende Fahrzeugattribute kennzeichnen, vorgesehen sind. Im einfachsten Fall kann die Zielvorgabe somit eine Auflistung aller Fahrzeugattribute der Fahrzeuge aufweisen, für die der entsprechende Datenerfassungsauftrag in Frage kommt. Bei einem Abgleich der Zielvorgabe mit den Fahrzeugattributen wird somit geprüft, ob ein Datenerfassungsauftrag für ein Fahrzeug mit den entsprechenden Fahrzeugattributen vorgesehen ist oder nicht.

Die Übertragung der Datenerfassungsaufträge und/oder der Abgleich der Zielvorgaben mit den Fahrzeugattributen der Fahrzeuge kann nach einer Anmeldung des Fahrzeugs an der zentralen Stelle erfolgen, beispielsweise nach Inbetriebnahme des Fahrzeugs. Die Übertragung der Datenerfassungsaufträge und/oder der Abgleich der Zielvorgaben mit den Fahrzeugattributen kann aber grundsätzlich zu einem beliebigen Zeitpunkt ausgelöst werden, wenn das entsprechende Fahrzeug mit der zentralen Stelle verbunden ist. Beispielsweise kann sich ein Datenerfassungskatalog für die Datenerhebung seitens der zentralen Stelle ändern, wobei Datenerfassungsaufträge modifiziert oder künftig für Fahrzeuge mit anderen Fahrzeugattributen vorgesehen werden können. In diesem Fall kann der Abgleich neu durchgeführt und die Datenerfassungsaufträge anschließend neu an die entsprechenden Fahrzeuge der Fahrzeugflotte verteilt werden.

Grundgedanke der Erfindung ist es somit, die Aufträge zur Datenerfassung fahrzeugspezifisch zu verteilen. Dabei werden die Datenerfassungsaufträge in der zentralen Stelle erstellt und durch die Zielvorgaben fahrzeugspezifisch auf Basis der Fahrzeugattribute verteilt. Wenn sich somit ein Fahrzeug an der zentralen Stelle anmeldet, kann vorgesehen sein, dass in der zentralen Stelle anhand der Fahrzeugidentifikationsdaten sämtliche Datenerfassungsaufträge ermittelt und übertragen werden, bei denen die Zielvorgabe und die aktuell vorliegenden Fahrzeugattribute übereinstimmen bzw. zusammen passen.

Es ist dabei ein besonderer Vorteil der Erfindung, dass lediglich die für eine aktuelle Datenerhebung relevanten Fahrzeuge der Fahrzeugflotte die Messaufträge bzw. Datenerfassungsaufträge erhalten. Durch dieses Vorgehen wird die Menge an Fahrzeugen, die Daten übertragen, und somit auch die entstehenden Übertragungskosten auf das Wesentliche begrenzt.

Verglichen mit dem Stand der Technik ergeben sich durch das erfindungsgemäße Verfahren aber noch eine Reihe weiterer Vorteile. Beispielsweise kann die Rechenlast innerhalb der Fahrzeuge deutlich reduziert sein, da die Entscheidung, ob und welche Daten erfasst werden müssen, nicht von den Fahrzeugen selbst, sondern von der zentralen Stelle getroffen wird. Da der Abgleich der Zielvorgaben mit den Fahrzeugattributen seitens der zentralen Stelle stattfindet, muss ein Fahrzeug also nicht sämtliche Datenerfassungsaufträge speichern und selbst überprüfen, ob beispielsweise die Fahrzeugposition eine Datenerfassung gemäß einem der Datenerfassungsaufträge unter Berücksichtigung der jeweiligen Zielvorgabe erforderlich macht.

Insbesondere kann also die Datenlast auch dadurch reduziert sein, dass nicht sämtliche Fahrzeuge der Fahrzeugflotte alle Datenerfassungsaufträge und Zielvorgaben empfangen, verarbeiten und speichern müssen.

In einer Weiterbildung der Erfindung kann vorgesehen sein, dass ein Fahrzeug nach dem Anmelden an der zentralen Stelle wenigstens eines der Fahrzeugattribute des Fahrzeugs an die zentrale Stelle übermittelt, wonach die zentrale Stelle das wenigstens eine Fahrzeugattribut zum Abgleich mit den Zielvorgaben der Datenerfassungsaufträge verwendet.

Auf diese Weise ist das Fahrzeug möglicherweise zwar nicht eindeutig identifizierbar, da die Verteilung der Fahrzeugattribute innerhalb der Fahrzeugflotte ggf. mehrfach identisch vorkommen kann. Gleichwohl ist eine eindeutige Identifizierung eines Fahrzeugs aber auch nicht zwingend erforderlich, da es erfindungsgemäß lediglich darauf ankommt, Fahrzeugen, deren Fahrzeugattribute mit entsprechenden Zielvorgaben von Datenerfassungsaufträgen übereinstimmen, die entsprechenden Datenerfassungsaufträge zu übermitteln. Die zu übertragenden Informationen sind somit auf das Wesentliche beschränkt.

Erfindungsgemäß ist vorgesehen, dass ein Fahrzeug nach dem Anmelden an der zentralen Stelle einen fahrzeugspezifischen Identifikator an die zentrale Stelle übermittelt, wonach die zentrale Stelle die Fahrzeugattribute auf Basis des fahrzeugspezifischen Identifikators aus einer Fahrzeugdatenbank der zentralen Stelle ausliest und anschließend zum Abgleich mit den Zielvorgaben der Datenerfassungsaufträge verwendet.

Bei dem fahrzeugspezifischen Identifikator kann es sich beispielsweise um eine Fahrgestellnummer oder einen ähnlichen Code handeln, über den das Fahrzeug eindeutig identifizierbar ist. Es kann allerdings auch ein Identifikator vorgesehen sein, der das Fahrzeug nicht eindeutig identifiziert, sondern lediglich eine eindeutige Zuweisung von Fahrzeugattributen ermöglicht. Beispielsweise können sogenannte Primärausstattungs-Codes (PR-Codes) zur Identifizierung der Fahrzeugausstattung bzw. der verbauten Komponenten an die zentrale Stelle übermittelt werden. Durch die Verwendung von fahrzeugspezifischen Identifikatoren kann die zu übertragende Datenmenge von dem Fahrzeug zu der zentralen Stelle weiter reduziert sein, da nun nicht einmal mehr eine vollständige Liste von Fahrzeugattributen übertragen werden muss.

Erfindungsgemäß ist vorgesehen, dass es sich bei den Fahrzeugattributen um eine Fahrzeugausstattung, eine Fahrzeugposition, eine Fahrzeugeigenschaft, einen Fahrzeugzustand, einen Fahrzeugtyp, eine Fahrzeugpriorisierung und/oder eine Fahrerinformation handelt.

Bei der Fahrzeugposition kann sich insbesondere um eine globale Positionsinformation, beispielsweise bestimmt durch ein globales Navigationssatellitensystem, insbesondere ein GPS-System oder Galileo-System, und/oder um eine relative Position, beispielsweise um einen Abstand zu einem Referenzpunkt, einem weiteren Fahrzeug und/oder um eine relative Position auf einer Straße, etc. handeln.

Bei einer Fahrzeugeigenschaft kann es sich beispielsweise um das Fahrzeuggewicht, die Fahrzeugabmessungen und/oder die Fahrzeugfarbe, etc. handeln.

Mit einem Fahrzeugzustand kann u. a. ein Betriebszustand, eine Fahrsituation, ein Gütezustand und/oder das Alter des Fahrzeugs gemeint sein.

Die Datenerfassungsaufträge können auch auf Basis von Fahrzeugattributen, die den Fahrzeugtyp betreffen, verteilt werden. Hierbei kann beispielsweise zwischen einem privat betriebenen Kraftfahrzeug, einem gewerblich betriebenen Kraftfahrzeug, einem Lastkraftwagen, einem Einsatzfahrzeug und/oder einem öffentlichen Verkehrsmittel unterschieden werden.

Ferner können die Fahrzeugattribute eine Fahrzeugpriorisierung betreffen. Beispielsweise können Datenerfassungsaufträge für bestimmte Fahrzeuge priorisiert werden, die sich beispielsweise bei einer vorhergehenden Datenerhebung als besonders aufschlussreich erwiesen haben oder von denen auf Grundlage weiterer Hintergrundinformationen eine besonders schnelle und/oder qualitativ hochwertige Datenerfassung zu erwarten ist.

Schließlich können Fahrzeugattribute auch Fahrerinformationen bzw. personalisierte Attribute betreffen. Beispielsweise können Datenerfassungsaufträge individuell nur an Fahrzeuge verteilt werden, die beispielsweise von Fahrern eines bestimmten Alters betrieben werden.

In einer Weiterbildung der Erfindung kann vorgesehen sein, dass es sich bei der Zielvorgabe um eine logische Verknüpfung von Fahrzeugattributen handelt.

Insbesondere können dabei Fahrzeugattribute durch Operationen der booleschen Algebra (UND / ODER / NICHT) miteinander verknüpft sein.

Erfindungsgemäß ist vorgesehen, dass die Datenerfassungsaufträge die Fahrdynamik des Fahrzeugs, Zustandsinformationen des Fahrzeugs, Fehlerspeicherinformationen des Fahrzeugs, Wartungsinformationen des Fahrzeugs und/oder Umgebungsinformationen des Fahrzeugs betreffen.

Bezüglich der Fahrdynamik des Fahrzeugs können die Datenerfassungsaufträge beispielsweise die aktuelle Position, die gefahrene Distanz, die Zeit in Bewegung, die Zeit im Stand, die Geschwindigkeit und/oder die Beschleunigung betreffen.

Die Umgebungsinformation des Fahrzeugs können beispielsweise Bildinformationen, Toninformationen und/oder Videoinformationen und/oder bereits ausgewertete bzw. klassifizierte Daten, wie Verkehrszeichen, umfassen.

Beispielsweise kann also vorgesehen sein, dass ein Datenfassungsauftrag die Erfassung von Verkehrszeichen und deren globale Position betrifft, wobei der Datenfassungsauftrag spezifisch an Fahrzeuge z. B. in Ingolstadt zugewiesen wird.

Ferner kann beispielsweise bei einem vermuteten Fehlverhalten eines Getriebes des Fahrzeugs im Zusammenspiel mit einer bestimmten Konfiguration und/oder einem bestimmten Motorentyp ein entsprechender Datenerfassungsauftrag zum Sammeln von statistisch relevanten Daten an die entsprechenden Fahrzeuge mit der relevanten Ausstattung übermittelt werden.

In einer Weiterbildung der Erfindung kann vorgesehen sein, dass die Datenerfassungseinrichtung des Fahrzeugs die Daten von wenigstens einem Fahrzeugbus, insbesondere von einem CAN-Bus, einem LIN-Bus und/oder einem FlexRay-Bus erfasst.

Erfindungsgemäß ist vorgesehen, dass die Datenerfassungseinrichtung des Fahrzeugs die Daten durch Verwenden von fahrzeugeigenen Sensoren erfasst.

Insbesondere wenn für das Verfahren bereits im Fahrzeug vorhandene Sensorik und/oder Rechenkapazität verwendet werden soll, können die Daten komfortabel von einem der bereits vorhandenen Fahrzeugbusse ausgelesen bzw. erfasst werden. Gleichwohl kann die Datenerfassung durch Verwenden von fahrzeugeigenen Sensoren flexibler sein.

Es kann vorgesehen sein, dass eine Auswertung der auftragsspezifisch gesammelten Daten durch eine Analyseeinrichtung der zentralen Stelle erfolgt. Die Daten können in der zentralen Stelle allerdings auch lediglich gespeichert werden.

Die erfassten Daten werden vorzugsweise als Rohdaten an die zentrale Stelle übermittelt und dort gespeichert oder dort optional weiterverarbeitet bzw. analysiert. Die Daten können allerdings auch bereits vorverarbeitet sein, beispielsweise seitens des Fahrzeugs.

Die Erfindung betrifft auch ein System zur Datenerhebung mit den Merkmalen des Anspruchs 5.

Merkmale und Vorteile, die bereits zu dem vorstehenden Verfahren beschrieben wurden, können selbstverständlich auch für das System herangezogen werden.

Nachfolgend ist ein Ausführungsbeispiel der Erfindung anhand der Zeichnung prinzipmäßig näher dargestellt.

Es zeigen:
- Fig. 1: ein System zur Datenerhebung mittels einer Fahrzeugflotte, umfassend eine Fahrzeugflotte und eine zentrale Stelle in schematischer Darstellung; und
- Fig. 2: eine schematische Darstellung des Verfahrens zur Datenerhebung.

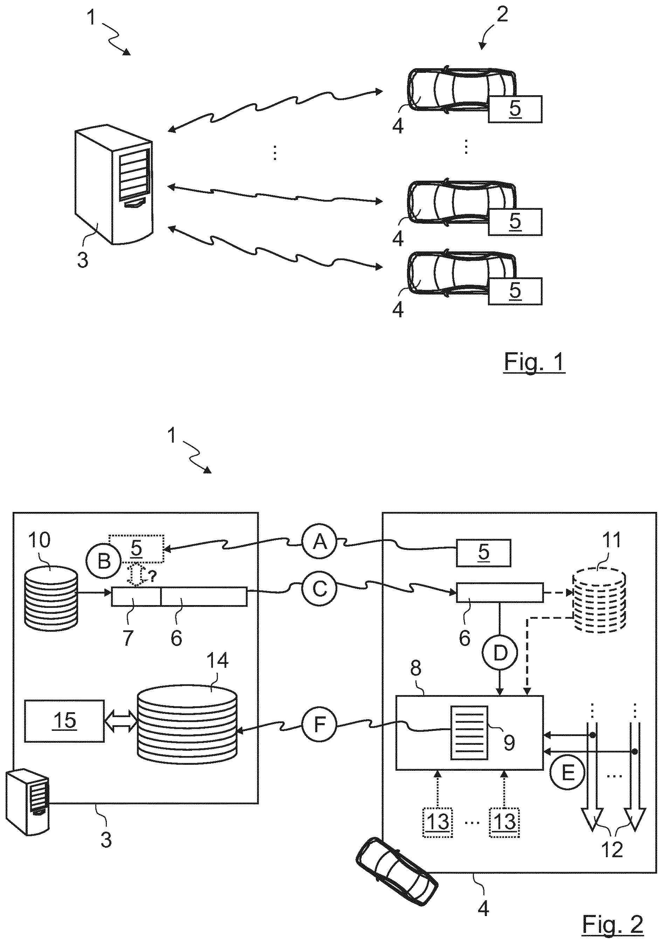

Fig. 1 zeigt stark schematisch ein System 1 zur Datenerhebung, umfassend eine Fahrzeugflotte 2 und eine zentrale Stelle 3. Die Fahrzeugflotte 2 besteht aus einer Mehrzahl von Fahrzeugen 4, die im Ausführungsbeispiel als Kraftfahrzeuge ausgebildet sind. Die Fahrzeuge 4 können über Fahrzeugattribute 5 identifiziert werden. Die Übertragung zwischen den Fahrzeugen 4 und der zentralen Stelle 3, bei der es sich beispielsweise um eine Servereinrichtung, bestehend aus einem oder mehreren Servern, handelt, ist im Ausführungsbeispiel bildlich als kabellose Übertragung angedeutet. Die näheren Details können der nachfolgend beschriebenen Fig. 2 entnommen werden.

In Fig. 2 ist das System 1 bzw. das Verfahren zur Datenerhebung mittels einer Fahrzeugflotte 2 und einer zentrale Stelle 3 detaillierter - aber immer noch schematisch - dargestellt. Zur Vereinfachung ist der Ablauf innerhalb eines einzelnen Fahrzeugs 4 der Fahrzeugflotte 2 abgebildet.

Es ist vorgesehen, dass die zentrale Stelle 3 mehrere Datenerfassungsaufträge 6 für die Datenerhebung erstellt und wenigstens einen der Datenfassungsaufträge 6 an wenigstens ein Fahrzeug 4 der Fahrzeugflotte 2 übermittelt, wobei die Fahrzeuge 4, wie bereits erwähnt, mittels Fahrzeugattributen 5 identifizierbar sind.

Bei einem Fahrzeugattribut 5 kann es sich beispielsweise um eine Fahrzeugausstattung, eine Fahrzeugposition, eine Fahrzeugeigenschaft, einen Fahrzeugzustand, einen Fahrzeugtyp, eine Fahrzeugpriorisierung und/oder eine Fahrerinformation handeln.

Es ist weiter vorgesehen, dass die zentrale Stelle 3 jeden Datenerfassungsauftrag 6 mit einer Zielvorgabe 7 verknüpft und dass die Fahrzeugattribute 5 der Fahrzeuge 4, die an der zentralen Stelle 3 angemeldet sind, mit den Zielvorgaben 7 der Datenerfassungsaufträge 6 abgeglichen werden, wonach bei einer Übereinstimmung der Zielvorgabe 7 eines der Datenerfassungsaufträge 6 mit den Fahrzeugattributen 5 eines der Fahrzeuge 4 der korrespondierende Datenerfassungsauftrag 6 an das entsprechende Fahrzeug 4 übermittelt wird, wonach eine Datenerfassungseinrichtung 8 des Fahrzeugs 4 auftragsspezifische Daten 9 erfasst und an die zentrale Stelle 3 übermittelt.

Nachfolgend ist ein beispielhafter Ablauf für das Verfahren zum Verständnis detaillierter beschrieben. Der Ablauf ist lediglich beispielhaft und nicht einschränkend zu verstehen.

In einem ersten Schritt A kann vorgesehen sein, dass ein Fahrzeug 4 nach dem Anmelden an der zentralen Stelle 3 wenigstens eines seiner Fahrzeugattribute 5, vorzugsweise alle Fahrzeugattribute 5, an die zentrale Stelle 3 übermittelt. Alternativ oder zusätzlich - im Ausführungsbeispiel nicht dargestellt - kann ein Fahrzeug 4 nach dem Anmelden an der zentralen Stelle 3 auch einen fahrzeugspezifischen Identifikator an die zentrale Stelle 3 übermitteln, wonach die zentrale Stelle 3 die Fahrzeugattribute 5 auf Basis des fahrzeugspezifischen Identifikators aus einer Fahrzeugdatenbank der zentralen Stelle 3 ausliest und anschließend zum Abgleich mit den Zielvorgaben 7 der Datenerfassungsaufträge 6 verwendet.

Anschließend an den ersten Schritt A kann die zentrale Stelle 3 in einem zweiten Schritt B das wenigstens eine Fahrzeugattribut 5 zum Abgleich mit den Zielvorgaben 7 der Datenerfassungsaufträge 6 verwenden (in Fig. 2 gestrichelt dargestellt).

Bei der Zielvorgabe 7 kann es sich vorzugsweise um eine logische Verknüpfung von Fahrzeugattributen 5 oder um eine Auflistung von in Frage kommenden Fahrzeugattributen 5 handeln. Beispielsweise kann vorgesehen sein, dass die zentrale Stelle 3 nach dem Anmelden eines Fahrzeugs 4 an der zentralen Stelle 3 bzw. nach dessen Übertragung seiner Fahrzeugattribute 5 alle Datenerfassungsaufträge 6, die beispielsweise in einem entsprechenden Auftragsspeicher 10 innerhalb der zentralen Stelle 3 abgelegt sein können, sequenziell oder parallel durchsucht und durch einen Abgleich zwischen Zielvorgabe 7 und Fahrzeugattributen 5 die in Frage kommenden Datenerfassungsaufträge 6 für das angemeldete Fahrzeug 4 ermittelt.

Wenn die zentrale Stelle 3 einen Datenerfassungsauftrag 6 ermittelt hat, dessen Zielvorgabe 7 zu dem Fahrzeug 4 bzw. zu dessen Fahrzeugattributen 5 passt, kann die zentrale Stelle 3 in einem dritten Schritt C den entsprechenden Datenerfassungsauftrag 6 an das Fahrzeug 4 übermitteln.

In einem vierten Schritt D kann der Datenerfassungsauftrag 6 innerhalb des Fahrzeugs 4 an die Datenerfassungseinrichtung 8 zur Weiterverarbeitung übergeben werden. Alternativ oder zusätzlich, im Ausführungsbeispiel gestrichelt dargestellt, kann der Datenerfassungsauftrag 6 in einem Auftragsspeicher 11 des Fahrzeugs 4 abgelegt und von der Datenerfassungseinrichtung 8 des Fahrzeugs 4 aus diesem ausgelesen werden. Grundsätzlich kann vorgesehen sein, dass ein Fahrzeug 4 eine beliebige Anzahl an Datenerfassungsaufträgen 6 sequentiell oder parallel verarbeitet.

In einem nachfolgenden Schritt E kann die Datenerfassungseinrichtung 8 des Fahrzeugs 4 die auftragsspezifischen Daten 9 erfassen. Hierzu kann die Datenerfassungseinrichtung 8 des Fahrzeugs 4 die Daten 9 beispielsweise von wenigstens einem Fahrzeugbus 12, insbesondere von einem CAN-Bus, einem LIN-Bus und/oder einem FlexRay-Bus erfassen. Alternativ oder zusätzlich, im Ausführungsbeispiel gestrichelt dargestellt, kann die Datenerfassungseinrichtung 8 des Fahrzeugs 4 die Daten 9 durch Verwenden von fahrzeugeigenen Sensoren 13 erfassen.

Die Datenerfassungsaufträge 6 können beispielsweise die Fahrdynamik des Fahrzeugs 4 (z. B. Position und Geschwindigkeit), Zustandsinformationen des Fahrzeugs 4 (z. B. Wartungszustand und Alter), Fehlerspeicherinformationen des Fahrzeugs 4, Wartungsinformationen des Fahrzeugs 4 (z. B. Kennzeichen der zuletzt angefahrenen Werkstatt und durchgeführte Arbeiten) und/oder Umgebungsinformationen des Fahrzeugs 4 (z. B. Verkehrszeichen) betreffen.

Die somit gesammelten Daten 9 können in einem abschließenden Schritt F von der Datenerfassungseinrichtung 8 bzw. von dem Fahrzeug 4 an die zentrale Stelle 3 zurück übermittelt werden. Die Daten 9 können anschließend direkt analysiert oder, wie im Ausführungsbeispiel dargestellt, in einem Datenspeicher 14 der zentralen Stelle 3 abgelegt und von einer Datenanalyseeinrichtung 15 bei Bedarf verarbeitet werden.

## Patentansprüche

1. Verfahren zur Datenerhebung mittels einer Fahrzeugflotte (2) und einer zentralen Stelle (3), wobei die zentrale Stelle (3) Datenerfassungsaufträge (6) für die Datenerhebung erstellt und wenigstens einen der Datenerfassungsaufträge (6) an wenigstens ein Fahrzeug (4) der Fahrzeugflotte (2) übermittelt, wobei die Datenerfassungsaufträge (6) die Fahrdynamik des wenigstens einen Fahrzeugs (4), Zustandsinformationen des wenigstens einen Fahrzeugs (4), Fehlerspeicherinformationen des wenigstens einen Fahrzeugs (4), Wartungsinformationen des wenigstens einen Fahrzeugs (4) und/oder Umgebungsinformationen des wenigstens einen Fahrzeugs (4) betreffen, und wobei die Fahrzeuge (4) der Fahrzeugflotte (2) in der zentralen Stelle (3) mittels Fahrzeugattributen (5) identifizierbar sind, bei denen es sich um eine Fahrzeugausstattung, eine Fahrzeugposition, eine Fahrzeugeigenschaft, einen Fahrzeugzustand, einen Fahrzeugtyp, eine Fahrzeugpriorisierung und/oder eine Fahrerinformation handelt, wobei die zentrale Stelle (3) jeden Datenerfassungsauftrag (6) mit einer Zielvorgabe (7) verknüpft, die eine Auflistung aller Fahrzeugattribute (5) der Fahrzeuge (4) aufweist, für die der entsprechende Datenerfassungsauftrag (6) in Frage kommt und wobei die Fahrzeugattribute (5) der Fahrzeuge (4), während die Fahrzeuge (4) an der zentralen Stelle (3) angemeldet sind, mit den Zielvorgaben (7) der Datenerfassungsaufträge (6) abgeglichen werden, wonach bei einer Übereinstimmung zwischen der Zielvorgabe (7) eines der Datenerfassungsaufträge (6) und dem oder den Fahrzeugattributen (5) eines der Fahrzeuge (4) der korrespondierende Datenerfassungsauftrag (6) an das entsprechende Fahrzeug (4) übermittelt wird, wonach, in einem nachfolgenden Schritt, eine Datenerfassungseinrichtung (8) des jeweiligen Fahrzeugs (4) auftragsspezifische Daten (9) durch Verwenden von fahrzeugeigenen Sensoren (13) erfasst und an die zentrale Stelle (3) übermittelt, und wobei als zentrale Stelle (3) eine Servereinrichtung, bestehend aus einem oder mehreren Servern, verwendet wird, wobei das wenigstens eine Fahrzeug (4) nach dem Anmelden an der zentralen Stelle (3) einen fahrzeugspezifischen Identifikator an die zentrale Stelle übermittelt, wonach die zentrale Stelle (3) die Fahrzeugattribute (5) auf Basis des fahrzeugspezifischen Identifikators aus einer Fahrzeugdatenbank der zentralen Stelle (3) ausliest und anschließend zum Abgleich mit den Zielvorgaben (7) der Datenerfassungsaufträge (6) verwendet.

2. Verfahren nach Anspruch 1,
**dadurch gekennzeichnet, dass**
das wenigstens eine Fahrzeug (4) nach dem Anmelden an der zentralen Stelle (3) wenigstens eines der Fahrzeugattribute (5) des Fahrzeugs (4) an die zentrale Stelle (3) übermittelt, wonach die zentrale Stelle (3) das wenigstens eine Fahrzeugattribut (5) zum Abgleich mit den Zielvorgaben (7) der Datenerfassungsaufträge (6) verwendet.

3. Verfahren nach Anspruch 1 oder 2,
**dadurch gekennzeichnet, dass**
es sich bei der Zielvorgabe (7) um eine logische Verknüpfung von Fahrzeugattributen (5) handelt.

4. Verfahren nach einem der Ansprüche 1 bis 3,
**dadurch gekennzeichnet, dass**
die Datenerfassungseinrichtung (8) des Fahrzeugs (4) die Daten (9) von wenigstens einem Fahrzeugbus (12), insbesondere von einem CAN-Bus, einem LIN-Bus und/oder einem FlexRay-Bus erfasst.

5. System (1) zur Datenerhebung, umfassend eine Fahrzeugflotte (2) und eine zentrale Stelle (3), wobei die zentrale Stelle (3) eingerichtet ist, um Datenerfassungsaufträge (6) für die Datenerhebung zu erstellen und wenigstens einen der Datenerfassungsaufträge (6) an wenigstens ein Fahrzeug (4) der Fahrzeugflotte (2) zu übermitteln, wobei die Datenerfassungsaufträge die Fahrdynamik des Fahrzeugs (4), Zustandsinformationen des Fahrzeugs (4), Fehlerspeicherinformationen des Fahrzeugs (4), Wartungsinformationen des Fahrzeugs (4) und/oder Umgebungsinformationen des Fahrzeugs (4) betreffen, und wobei die Fahrzeuge (4) der Fahrzeugflotte (2) Fahrzeugattribute (5) zu deren Identifizierung in der zentralen Stelle (3) aufweisen, bei denen es sich um eine Fahrzeugausstattung, eine Fahrzeugposition, eine Fahrzeugeigenschaft, einen Fahrzeugzustand, einen Fahrzeugtyp, eine Fahrzeugpriorisierung und/oder eine Fahrerinformation handelt, und wobei jeder Datenerfassungsauftrag (6) durch die zentrale Stelle (3) mit wenigstens einer Zielvorgabe (7) verknüpft ist, die eine Auflistung aller Fahrzeugattribute (5) der Fahrzeuge (4) aufweist, für die der entsprechende Datenerfassungsauftrag (6) in Frage kommt, wobei die zentrale Stelle (3) eingerichtet ist, die Fahrzeugattribute (5) der Fahrzeuge (4), während die Fahrzeuge (4) an der zentralen Stelle (3) angemeldet sind, mit den Zielvorgaben (7) der Datenerfassungsaufträge (6) abzugleichen, und bei einer Übereinstimmung zwischen der Zielvorgabe (7) eines der Datenerfassungsaufträge (6) und dem oder den Fahrzeugattributen (5) eines der Fahrzeuge (4) einen korrespondierenden Datenerfassungsauftrag (6) an das entsprechende Fahrzeug (4) zu übermitteln, und wobei eine Datenerfassungseinrichtung (8) des jeweiligen Fahrzeugs (4) eingerichtet ist, in einem nachfolgenden Schritt auftragsspezifische Daten (9) zu einem Datenerfassungsauftrag (6) durch Verwendung von fahrzeugeigenen Sensoren (13) zu erfassen und an die zentrale Stelle (3) zu übermitteln, wobei die zentrale Stelle (3) als Servereinrichtung, bestehend aus einem oder mehreren Servern, ausgebildet ist, wobei das wenigstens eine Fahrzeug (4) eingerichtet ist, um nach dem Anmelden an der zentralen Stelle (3) einen fahrzeugspezifischen Identifikator an die zentrale Stelle zu übermitteln, wobei die zentrale Stelle (3) eingerichtet ist, die Fahrzeugattribute (5) auf Basis des fahrzeugspezifischen Identifikators aus einer Fahrzeugdatenbank der zentralen Stelle (3) auszulesen und anschließend zum Abgleich mit den Zielvorgaben (7) der Datenerfassungsaufträge (6) zu verwenden.

## Claims

1. Method for data collection by means of a vehicle fleet (2) and a control centre (3), wherein the control centre (3) produces data acquisition tasks (6) for data collection and transmits at least one of the data acquisition tasks (6) to at least one vehicle (4) in the vehicle fleet (2), wherein the data acquisition tasks (6) relate to the driving dynamics of the at least one vehicle (4), state information of the at least one vehicle (4), fault memory information of the at least one vehicle (4), maintenance information of the at least one vehicle (4) and/or surroundings information of the at least one vehicle (4), and wherein the vehicles (4) in the vehicle fleet (2) are identifiable in the control centre (3) by means of vehicle attributes (5), which are vehicle equipment, a vehicle location, a vehicle property, a vehicle state, a vehicle type, a vehicle priority and/or driver information, wherein the control centre (3) associates each data collection task (6) with an objective (7) which has a list of all vehicle attributes (5) of the vehicles (4) for which the corresponding data collection task (6) is considered and wherein the vehicle attributes (5) of the vehicles (4), while the vehicles (4) are logged on to the control centre (3), are compared with the objectives (7) of the data acquisition tasks (6), after which, in the event of a match between the objective (7) of one of the data acquisition tasks (6) and the vehicle attribute(s) (5) of one of the vehicles (4), the corresponding data acquisition task (6) is transmitted to the corresponding vehicle (4), after which, in a subsequent step, a data acquisition apparatus (8) of the respective vehicle (4) acquires task-specific data (9) by using in-vehicle sensors (13) and transmits said data to the control centre (3), and wherein a server apparatus, consisting of one or more servers, is used as the control centre (3), wherein the at least one vehicle (4), after logging on to the control centre (3), transmits a vehicle-specific identifier to the control centre, after which the control centre (3) reads the vehicle attributes (5) on the basis of the vehicle-specific identifier from a vehicle database of the control centre (3) and then uses them for comparison with the objectives (7) of the data collection tasks (6).

2. Method according to claim 1,
**characterised in that**
the at least one vehicle (4) transmits at least one of the vehicle attributes (5) of the vehicle (4) to the control centre (3) after logging on to the control centre (3), after which the control centre (3) uses the at least one vehicle attribute (5) for comparison with the objectives (7) of the data acquisition tasks (6).

3. Method according to claim 1 or 2,
**characterised in that**
the objective (7) is a logical association of vehicle attributes (5).

4. Method according to any of claims 1 to 3,
**characterised in that**
the data acquisition apparatus (8) of the vehicle (4) acquires the data (9) from at least one vehicle bus (12), in particular from a CAN bus, a LIN bus and/or a FlexRay bus.

5. System (1) for data collection, comprising a vehicle fleet (2) and a control centre (3), wherein the control centre (3) is configured to produce data acquisition tasks (6) for data collection and to transmit at least one of the data acquisition tasks (6) to at least one vehicle (4) in the vehicle fleet (2), wherein the data acquisition tasks (6) relate to the driving dynamics of the vehicle (4), state information of the vehicle (4), fault memory information of the vehicle (4), maintenance information of the vehicle (4) and/or surroundings information of the vehicle (4), and wherein the vehicles (4) in the vehicle fleet (2) have vehicle attributes (5) for identification of said vehicles in the control centre (3), which attributes are vehicle equipment, a vehicle location, a vehicle property, a vehicle state, a vehicle type, a vehicle priority and/or driver information, and wherein each data collection task (6) is associated by the control centre (3) with at least one objective (7) which has a list of all vehicle attributes (5) of the vehicles (4) for which the corresponding data collection task (6) is considered, wherein the control centre (3) is configured to compare the vehicle attributes (5) of the vehicles (4), while the vehicles (4) are logged on to the control centre (3), with the objectives (7) of the data acquisition tasks (6), and, in the event of a match between the objective (7) of one of the data acquisition tasks (6) and the vehicle attribute(s) (5) of one of the vehicles (4), to transmit a corresponding data acquisition task (6) to the corresponding vehicle (4), and wherein a data acquisition apparatus (8) of the respective vehicle (4) is configured, in a subsequent step, to acquire task-specific data (9) relating to a data acquisition task (6) by using in-vehicle sensors (13) and to transmit said data to the control centre (3), wherein the control centre (3) is designed as a server apparatus consisting of one or more servers, wherein the at least one vehicle (4) is configured, after logging on to the control centre (3), to transmit a vehicle-specific identifier to the control centre, wherein the control centre (3) is configured to read the vehicle attributes (5) on the basis of the vehicle-specific identifier from a vehicle database of the control centre (3) and then to use them for comparison with the objectives (7) of the data collection tasks (6).

## Revendications

1. Procédé pour une collecte de données au moyen d'une flotte de véhicules (2) et d'un point central (3), dans lequel le point central (3) génère des commandes de saisie de données (6) pour la collecte de données et transmet au moins une des commandes de saisie de données (6) à au moins un véhicule (4) de la flotte de véhicules (2), dans lequel les commandes de saisie de données (6) concernent la dynamique de conduite du au moins un véhicule (4), des informations d'état du au moins un véhicule (4), des informations de mémoire d'erreur du au moins un véhicule (4), des informations d'entretien du au moins un véhicule (4) et/ou des informations d'environnement du au moins un véhicule (4), et dans lequel les véhicules (4) de la flotte de véhicules (2) peuvent être identifiés dans le point central (3) au moyen d'attributs de véhicule (5), qui peuvent être un équipement de véhicule, une position de véhicule, une caractéristique de véhicule, un état de véhicule, un type de véhicule, une priorité de véhicule et/ou une information sur le conducteur, dans lequel le point central (3) relie chaque commande de saisie de données (6) à un objectif (7), qui présente une liste de tous les attributs de véhicule (5) des véhicules (4) pour lesquels la commande de saisie de données (6) conrrespondante entre en jeu et dans lequel les attributs de véhicule (5) des véhicules (4) sont recoupés avec les objectifs (7) des commandes de saisie de données (6) tandis que les véhicules (4) sont enregistrés au niveau du point central (3), après quoi s'il y a une concordance entre l'objectif (7) d'une des commandes de saisie de données (6) et le ou les attributs de véhicule (5) d'un des véhicules (4), la commande de saisie de données (6) correspondante est transmise au véhicule (4) correspondant, après quoi, dans une étape suivante, un dispositif de saisie de données (8) saisit des données (9) spécifiques à la commande du véhicule (4) respectif au moyen de capteurs embarqués (13) propres au véhicule et transmet au point central (3), et dans lequel un dispositif serveur constitué d'un ou plusieurs serveurs est utilisé comme point central (3), dans lequel le au moins un véhicule (4) transmet un identifiant spécifique au véhicule au point central après l'enregistrement au niveau du point central (3), après quoi le point central (3) lit les attributs de véhicule (5) sur la base de l'identifiant spécifique au véhicule dans une base de données de véhicule du point central (3) et les utilise ensuite pour comparaison avec les objectifs (7) des commandes de saisie de données (6).

2. Procédé selon la revendication 1,
**caractérisé en ce que**
le au moins un véhicule (4) transmet au moins un des attributs de véhicule (5) du véhicule (4) au point central (3) après l'enregistrement au niveau du point central (3), après quoi le point central (3) utilise le au moins un attribut de véhicule (5) pour comparaison avec les objectifs (7) des commandes de saisie de données (6).

3. Procédé selon la revendication 1 ou 2,
**caractérisé en ce que**
l'objectif (7) peut être une relation logique d'attributs de véhicule (5).

4. Procédé selon l'une quelconque des revendications 1 à 3,
**caractérisé en ce que**
le dispositif de saisie de données (8) du véhicule (4) saisit les données (9) d'au moins un bus de véhicule (12), en particulier d'un bus CAN, d'un bus LIN et/ou d'un bus FlexRay.

5. Système (1) pour une collecte de données, comprenant une flotte de véhicules (2) et un point central (3), dans lequel le point central (3) est configuré pour générer des commandes de saisie de données (6) pour la collecte de données et pour transmettre au moins une des commandes de saisie de données (6) à au moins un véhicule (4) de la flotte de véhicules (2), dans lequel les commandes de saisie de données concernent la dynamique de conduite du véhicule (4), des informations d'état du véhicule (4), des informations de mémoire d'erreur du véhicule (4), des informations d'entretien du véhicule (4) et/ou des informations d'environnement du véhicule (4), et dans lequel les véhicules (4) de la flotte de véhicules (2) présentent des attributs de véhicule (5) pour leur identification dans le point central (3), qui peuvent être un équipement de véhicule, une position de véhicule, une caractéristique de véhicule, un état de véhicule, un type de véhicule, une priorité de véhicule et/ou des informations sur le conducteur, et dans lequel chaque commande de saisie de données (6) est reliée par le point central (3) à au moins un objectif (7), qui présente une liste de tous les attributs de véhicule (5) des véhicules (4) pour lesquels la commande de saisie de données (6) correspondante entre en jeu, dans lequel le point central (3) est configuré pour recouper les attributs de véhicule (5) des véhicules (4) avec les objectifs (7) des commandes de saisie de données (6) tandis que les véhicules (4) sont enregistrés au niveau du point central (3), et s'il y a une concordance entre l'objectif (7) d'une des commandes de saisie de données (6) et le ou les attributs de véhicule (5) d'un des véhicules (4) pour transmettre une commande de saisie de données (6) correspondante au véhicule (4) correspondant, et dans lequel un dispositif de saisie de données (8) du véhicule (4) respectif est configuré pour saisir des données (9) spécifiques à la commande relatives à une commande de saisie de données (6), dans une étape suivante, en utilisant des capteurs (13) propres au véhicule et pour transmettre au point central (3), dans lequel le point central (3) est conçu sous la forme d'un dispositif serveur, constitué d'un ou plusieurs serveurs, dans lequel le au moins un véhicule (4) est configuré pour transmettre un identifiant spécifique au véhicule au point central (3) après l'enregistrement au niveau du point central, dans lequel le point central (3) est configuré pour lire les attributs de véhicule (5) sur la base de l'identificateur spécifique au véhicule dans une base de données de véhicule du point central (3) et pour les utiliser ensuite pour comparaison avec les objectifs (7) des commandes de saisie de données (6).
